(19) Europäisches Patentamt
European Patent Office
Office européen des brevets

(11) Veröffentlichungsnummer: **0 341 539 B1**

(12) **EUROPÄISCHE PATENTSCHRIFT**

(45) Veröffentlichungstag der Patentschrift: **10.11.93**

(51) Int. Cl.[5]: **C08F 210/02**, C08F 4/64

(21) Anmeldenummer: **89107883.4**

(22) Anmeldetag: **29.04.89**

(54) **Katalysator für die Polymerisation von Ethylen, Verfahren zu dessen Herstellung und Verwendung der erhaltenen Ethylenpolymerisate zur Herstellung von Folien mit geringen Blockeigenschaften.**

(30) Priorität: **06.05.88 DE 3815486**

(43) Veröffentlichungstag der Anmeldung:
**15.11.89 Patentblatt 89/46**

(45) Bekanntmachung des Hinweises auf die Patenterteilung:
**10.11.93 Patentblatt 93/45**

(84) Benannte Vertragsstaaten:
**AT BE DE ES FR GB IT NL SE**

(56) Entgegenhaltungen:
**EP-A- 0 043 220**
**EP-A- 0 113 936**
**EP-A- 0 212 519**
**EP-A- 0 225 452**
**EP-A- 0 264 733**

(73) Patentinhaber: **BASF Aktiengesellschaft**
**Carl-Bosch-Strasse 38**
**D-67063 Ludwigshafen(DE)**

(72) Erfinder: **Schauss, Eckard, Dr.**
**Dirmsteiner Strasse 114B**
**D-6711 Heuchelheim(DE)**
Erfinder: **Vogt, Heinz, Dr.**
**Pranckhstrasse 30**
**D-6700 Ludwigshafen(DE)**
Erfinder: **Hemmerich, Rainer, Dr.**
**Veilchenweg 9**
**D-6718 Gruenstadt(DE)**
Erfinder: **Schweier, Guenther, Dr.**
**Friedrich-Pietzsch-Strasse 14**
**D-6701 Friedelsheim(DE)**
Erfinder: **Mueller-Mall, Dr.**
**Ulmenweg 39**
**D-6708 Neuhofen(DE)**

**EP 0 341 539 B1**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft ein Verfahren zur Herstellung eines Katalysators für die Copolymerisation von Ethylen nach dem Gasphasenwirbelscnichtverfahren unter Verwendung einer Aktivkomponente aus einer titan- und magnesiumenthaltenden Verbindung, eines Polysiloxans, eines Trägermaterials aus feinteiligem Siliciumdioxid, einer Aluminiumalkylverbindung und einer Lewisbase.

Bei derartigen Verfahren werden Copolymerisate des Ethylens mit $\alpha$-Olefinen erhalten, die sich durch eine Dichte im Bereich von 0,90 bis 0,94 g/cm$^3$ auszeichnen und die zu verbesserten Fertigteilen mit guten technischen Eigenschaften verarbeitet werden können. Insbesondere sind für die Folienherstellung Ethylenpolymerisate erwünscht, die geringe in organischen Lösungsmitteln wie n-Heptan oder Xylol lösliche Polymeranteile enthalten, wodurch z.B. das Blocken von Folien aus derartigen Ethylenpolymerisaten weitgehend vermieden werden kann.

Es ist bereits bekannt, zur Erfüllung dieser Erfordernisse Copolymerisate des Ethylens mit niedrigen kohlenwasserstofflöslichen Polymeranteilen durch Copolymerisation der Monomeren mit bestimmten Katalysatorsystemen herzustellen. Die bekannten Katalysatorsysteme werden durch Umsetzen einer bestimmten titanenthaltenden Katalysatorkomponente mit einer definierten Komplexverbindung aus einer Lewisbase wie einem Siloxan (vgl. EP-A-225 452), Estern, Ketonen, Oxacycloalkanen, Aminen (vgl. DE-A-35 38 577 bis 35 38 580) oder aliphatischen Ethern (vgl. EP-A-212 519) und einer bestimmten Aluminiumverbindung gewonnen.

Diese Katalysatoren genügen den meisten Anforderungen zur Herstellung von niedrigdichtem, folientauglichem Polymergrieß, als nachteilig erwiesen sich aber noch die morphologischen Eigenschaften der Polymerisate. Insbesondere für die technische Beherrschbarkeit des Gasphasenwirbelschichtverfahrens ergeben diese Katalysatoren einen zu hohen Feinstkornanfall bei der Polymerisation, der zu Verstopfungen der Kreisgassysteme führt und Abscheideeinrichtungen, wie Zyklone oder Filter, notwendig macht; von erheblichem Nachteil ist auch die niedrige Polymerschüttdichte sowie die Veränderung der Korngröße, der Kornverteilung und/oder der Kornform bei Variation der Polymerdichte und/oder des Meltindexes des Polymerisates.

In diesem Zusammenhang ist in der EP-A-43220 ein bestimmtes Katalysatorsystem beschrieben, mit dem es möglich ist, eine für das Gasphasenwirbelschichtverfahren besonders günstige Korngrößenverteilung im Polymerisat zu erzeugen. Die als relativ hoch bezeichnete Katalysatorproduktivität besagter Systeme liegt aber immer noch um den Faktor 2 tiefer als bei den Zuvor genannten. Außerdem erscheint die spezielle Aussiebung einer Kieselgelfraktion zum Erhalt der gewünschten Polymerisatmorphologie unabdingbar und mit großen Abfallmengen an Kieselgel verbunden zu sein.

Der Erfindung lag die Aufgabe zugrunde, einen Katalysator für das Gasphasenwirbelschichtverfahren aufzufinden, der die Herstellung von Ethylenpolymerisaten niederer Dichte mit geringen löslichen Polymeranteilen und gleichzeitig guter Morphologie erlaubt.

Eine weitere Aufgabe bestand darin, einen Katalysator für das Gasphasenwirbelschichtverfahren aufzufinden, der bei guter Rieselfähigkeit eine hohe Produktivität aufweist, wobei die eingangs erwähnten Nachteile hinsichtlich der Polymerschüttdichte und Korngröße weitgehend vermieden werden.

Es bestand ferner die Aufgabe, einen Katalysator für die Copolymerisation von Ethylen zu schaffen, der Ethylenpolymerisate liefert, die zur Herstellung von Folien mit geringen Blockeigenschaften geeignet sind.

Diese Aufgaben wurden durch ein Verfahren zur Herstellung eines Katalysators gemäß Patentansprüchen 1 bis 6 und durch Katalysatoren gemäß Patentanspruch 7 gelöst.

Unter Copolymerisation des Ethylens wird die Herstellung von Ethylenpolymerisaten der Dichte - bestimmt nach DIN 53 479 - im Bereich von 0,89 bis 0,95, insbesondere 0,90 bis 0,94 g/cm$^3$, mit untergeordneten Mengen an $C_3$- bis $C_8$-, insbesondere $C_4$- bis $C_6$-alpha-Monoolefinen durch Copolymerisation des bzw. der Monomeren bei Temperaturen von 30 bis 200, insbesondere 50 bis 120 °C und Drucken von 1 bis 200, insbesondere 5 bis 60 bar verstanden. Die Copolymerisation soll nach dem bekannten Gasphasenwirbelschichtverfahren unter Verwendung einer Aktivkomponente aus einer titan- und magnesiumenthaltenden Verbindung, eines Polysiloxans, eines Trägermaterials aus feinteiligem Siliciumdioxid, einer Aluminiumalkylverbindung und einer Lewisbase durchgeführt werden. Derartige Verfahren unter Verwendung obiger Katalysatorsysteme sind so bekannt, daß sich eine ausführliche Erläuterung erübrigt. In diesem Zusammenhang wird auf die eingangs zitierten Literaturstellen sowie zusätzlich noch auf die Publikationen: "Ullmanns Encyclopädie der technischen Chemie", 4, (1980), (19), Seite 186, Verlag Chemie GmbH, D-6940 Weinheim; "Encyclopedia of Polymer Science and Engineering", 2, (1986), (6), Seiten 429 bis 454 und die EP-A-264 733 hingewiesen.

Nach erfindungsgemäßem Verfahren soll bei der Herstellung des erfindungsgemäßen Katalysators so vorgegangen werden, daß man eine mit Alkohol als Komplexbildner umgesetzte titan- und magnesiumenthaltende Aktivkomponente in Gegenwart des Polysiloxans aus homogener Lösung auf das Siliciumdioxid durch Eindampfen des Lösungsmittels aufzieht und anschließend die daraus resultierende homogene Katalysatorvorstufe durch Behandeln mit der Aluminiumalkylverbindung und der Lewisbase in einer inerten Kohlenwasserstofflösung voraktiviert. Nach bevorzugter Verfahrensweise wird beim Eindampfen des Lösungsmittels unter Inertgas bzw. bei reduziertem Druck bis zu 50 Volumenprozent des Lösungsmittels im Temperaturbereich von 60 bis 80 °C und der Rest bis zu einem Endvakuum von 5 mbar bei einer Temperatur von maximal 50 °C entfernt. Die Verfahrensweise ist abhängig vom Siedepunkt des Lösungsmittels. Liegt z.B. der Siedepunkt des Lösungsmittels innerhalb der angegebenen Grenzen, gilt: unter Inertgas; liegt der Siedepunkt jedoch oberhalb 80 °C ist verminderter Druck anzuwenden. Bevorzugt ist ferner ein Verfahren bei dem das Lösungsmittel ein gesättigter Oxakohlenwasserstoff wie Di-n-butylether oder Tetrahydrofuran ist. Auch ein Verfahren, bei dem das Trägermaterial Siliciumdioxid eine mittlere spezifische Oberfläche von 200 bis 400 $m^2/g$ und einen mittleren Korndurchmesser von 5 bis 200 $\mu m$, ein mittleres spezifisches Porenvolumen von 1,5 bis 2,0 $cm^3/g$ aufweist und ein Verfahren, bei dem die Lewisbase ein Silan der nachstehenden Formel $R^1{}_mSi(OR^2)_{4-m}$, worin m = eine Zahl zwischen 0 und 4 und $R^1$ sowie $R^2$ = ein $C_1$- bis $C_{12}$-Kohlenwasserstoffrest, oder ein dimeres Siloxan der allgemeinen Formel ($R^1$ )-Si-O-Si($R^2$) ist, worin $R^1$ und $R^2$ die oben angegebene Bedeutung haben.

Bevorzugt ist auch ein Verfahren bei dem das Polysiloxan die allgemeine Formel

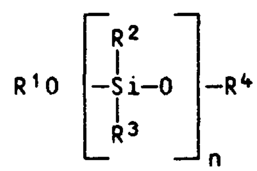

aufweist, worin $R^1$, $R^2$, $R^3$ und $R^4$ gleich oder verschieden sein können und mindestens einen Methyl- oder mindestens einen Phenylrest darstellen und worin n = eine ganze Zahl zwischen 10 und 3000.

Zur erfindungsgemäßen Ausgestaltung des Verfahrens ist im einzelnen folgendes zu sagen:

Als Aktivkomponenten werden in der vorliegenden Erfindung eine Titan enthaltende Verbindung der allgemeinen Formel

$TiCl_3 \cdot nAlCl_3$

worin n steht für eine Zahl im Bereich von 0 bis 0,5, vorzugsweise 0,2 bis 0,4 und insbesondere 0,31 bis 0,35, sowie eine magnesiumhaltige Verbindung der allgemeinen Formel

$MgX_2$

worin X steht für Cl, Br oder Iod, verwendet. Als bevorzugte Magnesium-Komponente wird wasserfreies $MgCl_2$ eingesetzt.

Die zuvor genannten Aktivkomponenten werden mit Alkoholen der allgemeinen Formel

R-OH ,

worin R für einen aliphatischen $C_2$- bis $C_{14}$-Kohlenwasserstoffrest steht, nach üblichen Methoden komplexiert (z.B. nach D.C. Bradley, M.L. Mehta, Canadian Journal of Chemistry, 40, [1962], Seiten 1710 bis 1713). Die Komplexe können entweder in situ, etwa aus $MgCl_2$ und 2-Ethylhexanol in Tetrahydrofuran als Lösungsmittel, oder in isolierter Form, z.B. als $TiCl_3 \cdot 1/3\ AlCl_3 \cdot 5,33$ i-Propanol, eingesetzt werden.

Das zu verwendende Lösungsmittel ist ein gesättigter Oxakohlenwasserstoff der mehr als 3 Kohlenstoffatome aufweist. Gut geeignet sind z.B. Di-n-butylether bzw. Tetrahydrofuran.

Das bevorzugt einzusetzende Polysiloxan der allgemeinen Formel

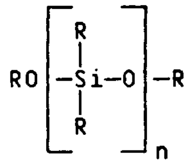

kann bevorzugt durchweg nur Methylreste tragen, es können insbesondere aber auch einige Methylreste durch Phenylreste ersetzt sein. Die Anzahl der Siloxaneinheiten n kann bevorzugt zwischen 10 und 3000 liegen, so daß sich die Viskosität des Polysiloxans zwischen 1000 x $10^{-6} m^2.s^{-1}$ und 500.000 x $10^{-6}.s^{-1}$ (1000 und 500.000 Centistokes insebondere zwischen 10.000 x $10^{-6} m^2.s^{-1}$ und 200.000 x $10^{-6} m^2.s^{-1}$ (10.000 und 200.000 Centistokes) bewegt.

Das in der vorliegenden Erfindung verwendete Trägermaterial ist ein feinteiliges Siliciumdioxid, bevorzugt mit einem mittleren spezifischen Porenvolumen von 1,5 bis 2,0 $cm^3/g$ sowie einer spezifischen Oberfläche von 200 bis 400 $m^2/g$. Der mittlere Korndurchmesser sollte bevorzugt zwischen 5 und 200, insbesondere zwischen 15 und 100 µm liegen. Wie sich gezeigt hat, sind die der gegebenen Spezifikation entsprechenden im Handel erhältlichen Trägergele gut geeignet.

Einsatzstoffe zur Nachbehandlung der Katalysatorvorstufe

Die in einem inerten Kohlenwasserstoff gelöste Aluminiumverbindung hat die Formel

$Al(R^1)(R^2)X$

worin $R^1$ und $R^2$ für einen gesättigten $C_1$- bis $C_{12}$-Kohlenwasserstoffrest oder Chlor steht, insbesondere für eine $C_2$- bis $C_8$-Alkylgruppe. Für X ist Chlor, Wasserstoff oder eine Alkoxygruppe zu setzen. Gut geeignet ist z.B. Diethylaluminiumchlorid.

Als Lewisbasen werden bevorzugt Silanderivate der nachstehenden Formel

$R^1mSi(OR^2)_{4-m}$

verwendet, worin m steht für eine Zahl zwischen 0 und 4 und $R^1$ sowie $R^2$ für einen $C_1$- bis $C_{12}$-Kohlenwasserstoffrest. Als Beispiele seien aufgeführt Tetraethylorthosilicat, Trimethoxyvinylsilan, Diethoxydimethylsilan, Trimethylethoxysilan oder Allyltrimethylsilan.

Zum anderen können aber auch dimere Siloxane der allgemeinen Formel

$(R^1)_3Si\text{-}O\text{-}Si\text{-}(R^2)_3$

worin $R^1$ und $R^2$ für eine $C_1$- bis $C_{12}$-Alkylgruppe stehen, eingesetzt werden wie z.B. Hexamethyl- bzw. Hexaethyldisiloxan.

1. Übliche Katalysatorherstellung

1.1 Herstellung der Katalysatorvorstufe

Zur Herstellung der Katalysatortränklösung werden die zuvor mit einem Alkohol komplexierten Aktivkomponenten in einem Oxakohlenwasserstoff gelöst, so daß das Verhältnis von Magnesium- (in Mol Magnesium) zu Titankomponente (in Mol Titan) zwischen 1 und 4, insbesondere zwischen 1,5 und 2,5 liegt. Die Zugabe des zuvor definierten Polysiloxans geschieht zweckmäßigerweise an dieser Stelle, kann aber auch an jeder anderen Stelle des Lösungsprozesses erfolgen, so daß das Gewichtsverhältnis von Polysiloxan zu Mg-Komponente (gerechnet als Mg) zwischen 1 und 16, insbesondere zwischen 2 und 8 liegt. Zur vollständigen Homogenisierung kann die Lösung noch 5 bis 30 Minuten bei 40 bis 60 °C gerührt werden; das Verhältnis der genannten Einsatzstoffe untereinander ist in jedem Fall so zu wählen, daß die resultierende Lösung einphasig und ohne größeren Feststoffanteil weiterverwendet werden kann.

Je nach Reinheitsgrad der Einsatzstoffe empfiehlt es sich, die Lösung vor der Vereinigung mit dem Trägermaterial zu filtrieren. Das Gewichtsverhältnis von Kieselgel zu Magnesiumkomponente (gerechnet als Magnesium) richtet sich nach der gewünschten Produktivität des Katalysators und

sollte die Zahl 50 nicht überschreiten und den Wert 20 nicht unterschreiten. Vorzugsweise liegt das Verhältnis im Bereich von 40:1 bis 30:1.

Es ist günstig, nach der Vereinigung das Ganze während einer Zeitspanne von 10 bis 90, insbesondere 30 bis 60 Minuten auf einer Temperatur von 20 °C bis wenige Grade unter dem Siedepunkt der Lösung - jedoch nicht über 80 °C - zu halten und erst danach die gebildete Suspension einzudampfen.

Beim Eindampfvorgang sollte die Temperatur der Suspension zunächst in einem Bereich von 60 bis 80 °C gehalten werden, so daß das Lösungsmittel entweder unter Inertgasüberlagerung bzw. unter reduziertem Druck bis zu etwa 50 % des eingesetzten Volumens abdestilliert. Zur vollständigen Entfernung aller flüchtigen Bestandteile ist es zweckmäßig, den Druck langsam auf ein Endvakuum von ca. 10 mbar zu reduzieren. Um eine vorzeitige Zersetzung der Aktivkomponenten auf dem Träger zu vermeiden, sollte die Temperatur des zu trocknenden Gutes auf maximal 50 °C oder darunter abgesenkt werden, nach dem etwa 70 bis 90 Vol.% des eingesetzten Lösungsmittels entfernt sind.

Durch stete Einhaltung der oben definierten Temperatur- und Druckbedingungen während des Eindampfvorgangs ist die Herstellung einer äußerst homogenen und sehr gut rieselfähigen Katalysatorvorstufe gewährleistet. Außerdem unterbleibt jegliche Art der Wandbelegungsbildung in der zu verwendenden Trocknungsapparatur. Als Trocknungsapparatur eignen sich z.B. Rotationsverdampfer oder Doppelkonustrockner.

1.2 Nachbehandlung der Katalysatorvorstufe

Die außerordentliche Homogenität der in 1.1 beschriebenen Katalysatorvorstufe konnte anhand lichtmikroskopischer Untersuchungen bestätigt werden. So kann davon ausgegangen werden, daß alle Aktivkomponenten vollständig auf dem $SiO_2$-Trägerkorn aufgezogen sind bzw. keine störenden Nebenfällungen oder Agglomerate neben dem geträgsrten Material vorliegen.

Bei dem anschließenden Nachbehandlungsschritt darf dieses einmal erreichte Erscheinungsbild der Katalysatorvorstufe nicht mehr verändert werden.

Hierzu wird zunächst eine Lösung aus 100 Volumenteilen eines inerten Kohlenwasserstoffs, 10 bis 100, vorzugsweise 30 bis 60 Volumenteilen, bezogen auf eine etwa 35 gew.%ige Lösung der zuvor definierten Aluminiumkomponente in einem inerten Kohlenwasserstoff, sowie 1 bis 30, vorzugsweise 2 bis 15 Volumenteilen der zuvor beschriebenen Siliciumverbindung, so daß das Verhältnis der Volumina zwischen Aluminiumkomponente und Silanverbindung zwischen 40:1 und 2:1, vorzugsweise zwischen 25:1 und 3:1 liegt, herstellt.

Anschließend wird die erhaltene Lösung auf eine Temperatur zwischen -80 °C und +10 °C, insbesondere auf -20 °C bis ±0 °C, abgekühlt.

Zu dieser Lösung wird die zuvor beschriebene Katalysatorvorstufe in fester Form zugegeben. Die erhaltene Suspension wird langsam auf Temperaturen zwischen 20 und 80 °C, insbesondere auf 40 bis 60 °C, erwärmt und unter Vervollständigung der Reaktion 15 bis 300, insbesondere 30 bis 150 Minuten bei dieser Temperatur belassen.

Das festphasige Produkt kann nach einer Wäsche mit einem inerten Kohlenwasserstoff mittels Digerieren oder Filtrieren in Form der erhaltenen Suspension als Übergangsmetall-Katalysatorkomponente verwendet werden.

Falls gewünscht, ist es aber auch möglich, das festphasige Produkt zu isolieren und dann erst als Katalysatorkomponente einzusetzen, wobei sich zum Isolieren der folgende Weg anbietet: Man trennt das Produkt von der flüssigen Phase mittels Filtration und wäscht es mit einem inerten Kohlenwasserstoff, worauf man es im Inertgasstrom oder Vakuum trocknet.

2. Übliche Polymerisation

Die neuen Titan enthaltenden Katalysatorsysteme lassen sich im Rahmen üblicher Polymerisationsverfahren zum Herstellen der dort genannten Polymerisate einsetzen.

Besonders hinzuweisen bleibt, daß die neuen Katalysatorsysteme sich vornehmlich zur Herstellung von Copolymerisaten des Ethylens mit $\alpha$-Olefinen im Gasphasenwirbelschichtverfahren eignen. Vor allem die Kombination aus hoher Katalysatorproduktivität, ausgezeichneter Polymerisatmorphologie und äußerst niedriger Klebneigung der Polymerisate selbst bei Dichten unterhalb 0,910 $g/cm^3$ sind für den sicheren und rentablen Betrieb einer solchen Anlage von großem Vorteil.

Die mit der Erfindung erzielten Vorteile bestehen insbesondere auch darin, daß mit den erfindungsgemäßen Katalysatoren Ethylenpolymerisate niederer Dichte mit geringen löslichen Polymeranteilen bei gleichzeitig guter Morphologie erhalten werden. Ein weiterer Vorteil ist darin zu sehen, daß die erfindungsgemäßen Katalysatoren bei guter Rieselfähigkeit eine hohe Produktivität aufweisen. Ferner ist es als ein Vorteil anzusehen, daß Folien aus den erhaltenen Ethylenpolymerisaten eine geringe Blockneigung aufweisen.

Beispiel 1

a) Herstellung der Katalysatorvorstufe

In eine Lösung aus 100 ml Tetrahydrofuran und 12 ml Ethanol werden 3,3 g wasserfreies $MgCl_2$ eingetragen und solange erhitzt bis alles $MgCl_2$ gelöst bzw. kein Bodensatz mehr festzustellen ist.

In diese Lösung werden nacheinander 5 g Siliconöl (Polysiloxan) (Viskosität 12.500 x $10^{-6}$ $m^2.s^{-1}$-(12.500 cSt)), 8,5 g Stauffer AA (≙ $TiCl_3$ • 1/3 $AlCl_3$) • 5,33 i-Propanol und 25 g Stauffer AA Kieselgel (Grace Typ 332, 20 bis 45 µm) gegeben.

Die erhaltene Suspension wird wie zuvor beschrieben im Rotationsverdampfer bis zur Trockene eingedampft.

Es werden 41 g Katalysatorvorstufe erhalten.

b) Nachbehandlung der Katalysatorvorstufe

Dazu werden 23,4 g der zuvor erhaltenen Katalysatorvorstufe bei -5 °C in eine Lösung aus 100 ml n-Heptan, 45,0 ml Diethylaluminiumchlorid (DEAC) und 9,0 ml Trimethylethoxysilan (TMES) gegeben, so daß die Innentemperatur 0 °C nicht übersteigt. Bei dieser Temperatur beläßt man die Suspension für die Zeitdauer von 30 min. Anschließend erwärmt man auf 50 °C. Zur Vervollständigung der Reaktion wird unter Beibehalt der Temperatur weitere 90 Minuten gerührt. Nach Abdekantieren der überstehenden Lösung und dreimaligem Waschen mit je 35 ml n-Heptan wird der Katalysator getrocknet.

Auswaage: 20 g

c) Polymerisation

Die Copolymerisation von Ethylen und Buten-1 mittels der vorstehend beschriebenen Katalysatorkomponente wurde in einem 1 l-Rührautoklaven durchgeführt. Dazu wird dieser mit 250 ml Isobutan, 130 ml Buten sowie 0,5 ml einer 1 n Triisobutylaluminium-Lösung (TiBA) in n-Heptan beschickt. Der Wasserstoffpartialdruck beträgt 1 bar, die Temperatur 75 °C. Der Gesamtdruck wird mittels Ethylen auf 28 bar ergänzt. Nähere Angaben zu dem erhaltenen Polymerisat finden sich in der nachstehenden Tabelle.

Beispiel 2

a) Katalysatorvorstufe

Die Herstellung erfolgt wie in Beispiel 1, jedoch werden anstelle von Ethanol 11 ml 2-Ethylhexanol und anstelle von Siliconöl der Viskosität 12.500 x $10^{-6}$ $m^2.s^{-1}$(12.500 cSt) ein solches mit 100.000 x $10^{-6}$ $m^2.s^{-1}$(100.000 cSt) verwendet.

Auswaage: 44 g

b) Nachbehandlung

Dazu werden 26,4 g Katalysatorvorstufe mit 37,5 ml DEAC und 9 ml TMES in der vorher beschriebenen Art und Weise umgesetzt.

Auswaage: 22,5 g

c) Polymerisation

analog Beispiel 1

Beispiel 3

a) Katalysatorvorstufe

Die Herstellung erfolgt wie in Beispiel 1, jedoch werden anstelle von Ethanol 16 ml Dodecanol und anstelle von Siliconöl der Viskosität 12.500 x $10^{-6}$ $m^2.s^{-1}$(12.500 cSt) ein solches mit 500.000 x $10^{-6}$ $m^2.s^{-1}$(500.000 cSt) verwendet.

Auswaage: 46,0 g

b) Nachbehandlung

T Dazu werden 27,6 g Katalysatorvorstufe mit 37,5 ml DEAC und 7,5 ml TMES wie zuvor beschrieben umgesetzt.

Auswaage: 22.0 g

c) Polymerisation

analog Beispiel 1

Beispiel 4

a) Katalysatorvorstufe

Zu einer Lösung aus 60 ml THF, 11 ml 2-Ethylhexanol und 3,3 g $MgCl_2$ wird eine Lösung aus 60 ml

THF, 8,1 ml n-Butanol und 3,25 g Stauffer AA ($TiCl_3 \cdot 1/3\ AlCl_3$) gegeben. Anschließend wird mit 5 g Siliconöl ($100.000 \times 10^{-6} m^2.s^{-1}$(100.000 cSt)) versetzt und die erhaltene Lösung auf 25 g Kieselgel aufgezogen.
Auswaage: 43,0 g
b) Nachbehandlung
analog Beispiel 3, jedoch mit 25,8 g Katalysatorvorstufe
c) Polymerisation
analog Beispiel 1

Beispiel 5

Zu einer Lösung aus 100 ml Di-n-butylether und 25 ml 1-Butanol werden 3,3 g wasserfreies $MgCl_2$ gegeben und bis zur vollständigen Auflösung in der Wärme gerührt.

Die weiteren Verfahrensschritte werden analog Beispiel 1a bis 1c ausgeführt.

Beispiel 6

6a ,c) analog 2a, 1c
b) Nachbehandlung
Die Nachbehandlung erfolgt wie in Beispiel 2b, jedoch werden anstelle von Trimethylethoxysilan 1,6 ml Trimethoxyvinylsilan eingesetzt. Auswaage: 23.2 g

Beispiel 7

7a,c) analog 2a, 1c
b) Nachbehandlung
analog 6b, jedoch mit 4,5 ml Allyltrimethylsilan

Vergleichsbeispiel 1

wie Beispiel 2, jedoch ohne Polysiloxan bei der Katalysatorvorstufe
Dieses Vergleichsbeispiel zeigt, daß der Einsatz eines hochmolekularen Polysiloxans den Gehalt an löslichen Anteilen deutlich senkt. Es wirkt aber nicht als sog. polymeres Bindemittel wie z.B. die in US-Patent 4 521 573 verwendeten Polymere. da Schüttgewicht und Feingut nicht beeinflußt werden.

Vergleichsbeispiel 2

wie Beispiel 2, jedoch ohne Polysiloxan; die Nachbehandlung wurde in Analogie zu der anfangs zitierten EP-A-225 452, also durch Suspendieren der Vorstufe und Zugabe der Alkyl/Silan-Lösung in der Wärme durchgeführt.

Vergleichsbeispiel 3

wie Beispiel 2, jedoch ohne Polysiloxan; die Nachbehandlung wurde in Analogie zu der anfangs zitierten EP-A-0 043 220 unter ausschließlicher Verwendung von DEAC und Behandlung in der Wärme durchgeführt.

Produktmorphologie wie Vergleichsbeispiel 2, lösliche Anteile deutlich erhöht.

Vergleichsbeispiel 4

wie Vergleichsbeispiel 2, jedoch mit Polysiloxan auf der Vorstufe
Produktmorphologie wie Vergleichsbeispiel 2, jedoch geringere lösliche Anteile.

Vergleichsbeispiel 5

wie Vergleichsbeispiel 3, jedoch mit Polysiloxan auf der Vorstufe
Produktmorphologie wie Vergleichsbeispiel 3, jedoch geringere lösliche Anteile.

Tabelle

| Beispiel | Dichte[1] | Schmelzindex[2] | Produktivität[3] | Schüttdichte[4] | lösl. Anteile[5] | Feingut[6] | Feinstgut[7] |
|---|---|---|---|---|---|---|---|
| 1 | 0.922 | 1.1 | 10.800 | 370 | 0.3 | 5.0 | 0.0 |
| 2 | 0.920 | 1.1 | 11.500 | 390 | 0.3 | 3.8 | 0.0 |
| 3 | 0.919 | 1.0 | 9.700 | 360 | 0.5 | 6.0 | 0.0 |
| 4 | 0.920 | 1.0 | 10.500 | 360 | 0.4 | 7.2 | 0.0 |
| 5 | 0.919 | 1.0 | 11.000 | 400 | 0.2 | 6.0 | 0.0 |
| 6 | 0.921 | 0.9 | 11.100 | 380 | 0.7 | 8.0 | 0.0 |
| 7 | 0.920 | 0.9 | 10.800 | 370 | 0.6 | 8.5 | 0.0 |
| Vgl. bsp. | | | | | | | |
| 1 | 0.919 | 0.9 | 13.000 | 380 | 1.7 | 6.2 | 0.0 |
| 2 | 0.920 | 1.0 | 13.800 | 290 | 1.5 | 19.3 | 0.6 |
| 3 | 0.919 | 1.1 | 12.400 | 270 | 3.7 | 16.2 | 0.3 |
| 4 | 0.920 | 1.0 | 14.200 | 270 | 0.7 | 17.6 | 0.5 |
| 5 | 0.920 | 1.0 | 12.100 | 280 | 1.7 | 14.8 | 0.4 |

[1] in $g/cm^3$ nach DIN 53 479

[2] MFI 190/2,16 in g/10 min nach DIN 53 735

[3] in g Polymerisat pro g Katalysator

[4] in $g/cm^3$ nach DIN 43 468

[5] in % des Polymerisats bei 1 g Polymerisat in 5 g n-Heptan bei $20^0$C innerhalb von 2 Stunden

[6] Anteil des Polymerisates mit einer Korngröße kleiner 0,5 mm in %

[7] analog 6), aber kleiner 0,1 mm

## Patentansprüche

1. Verfahren zur Herstellung eines Katalysators für die Copolymerisation von Ethylen nach dem Gasphasenwirbelschichtverfahren unter Verwendung einer Aktivkomponente aus einer titan- und magnesiumenthaltenden Verbindung, eines Polysiloxans, eines Trägermaterials aus feinteiligem Siliciumdioxid, einer Aluminiumalkylverbindung und einer Lewisbase, dadurch gekennzeichnet, daß man die mit einem Alkohol als Komplexbildner umgesetzte titan- und magnesiumenthaltende Aktivkomponente in Gegenwart des Polysiloxans aus homogener Lösung auf das Siliciumdioxid durch Eindampfen des Lösungsmittels aufzieht und anschließend die daraus resultierende homogene Katalysatorvorstufe durch Behandeln mit der Aluminiumalkylverbindung und der Lewisbase in einer inerten Kohlenwasserstofflösung voraktiviert, und wobei als Aktivkomponente aus einer titanenthaltenden Verbindung eine titanenthaltende Verbindung der algemeine Formel $TiCl_3.nAlCl_3$, worin n steht für eine Zahl im Bereich von 0 bis 0,5, als Aktivkomponente aus einer magnesiumenthaltenden Verbindung eine magnesiumhaltige Verbindung der allgemeinen Formel $MgX_2$, worin X steht für Cl, Br oder Iod, und als Alkohol Alkohole der allgemeinen Formel ROH, worin R für einen aliphatischen $C_2$ bis $C_{14}$-Kohlenwasserstoffrest steht, eingesetzt werden, und wobei die in einem inerten Kohlenwasserstoff gelöste Aluminiumverbindung die Formel $Al(R^1)(R^2)X$, worin $R^1$ und $R^2$ für einen gesättigten $C_1$- bis $C_{12}$-Kohlenwasserstoffrest oder Chlor steht und worin für X Chlor, Wasserstoff oder eine Alkoxygruppe zu setzen ist, hat.

2. Verfahren nach Anspruch 1, dadurch gekennzeichnet, daß beim Eindampfen des Lösungsmittels unter Inertgas bzw. bei reduziertem Druck bis zu 50 Volumenprozent des Losungsmittels im Temperaturbereich von 60 bis 80 °C und der Rest bis zu einem Endvakuum von 5 mbar bei einer Temperatur von

maximal 50 °C entfernt wird.

3. Verfahren nach Anspruch 1, dadurch gekennzeichnet, daß das Lösungsmittel ein gesättigter Oxakohlenwasserstoff ist.

4. Verfahren nach Anspruch 1, dadurch gekennzeichnet, daß das Trägermaterial Siliciumdioxid eine mittlere spezifische Oberfläche von 200 bis 400 $m^2/g$, einen mittleren Korndurchmesser von 5 bis 200 µm und ein mittleres spezifisches Porenvolumen von 1,5 bis 2,0 $cm^3/g$ aufweist.

5. Verfahren nach Anspruch 1, dadurch gekennzeichnet, daß die Lewisbase ein Silanderivat der nachstehenden Formel $R^1{}_mSi(OR^2)_{4-m}$, worin m = eine Zahl zwischen 0 und 4 und $R^1$ sowie $R^2$ = ein $C_1$- bis $C_{12}$-Kohlenwasserstoffrest oder ein dimeres Siloxan der allgemeinen Formel $(R^1)_3$-Si-O-Si$(R^2)_3$ ist und worin $R^1$ und $R^2$ für eine $C_1$- bis $C_{12}$-Alkylgruppe stehen.

6. Verfahren nach Anspruch 1, dadurch gekennzeichnet, daß das Polysiloxan die allgemeine Formel

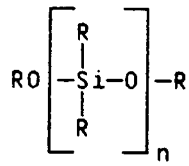

aufweist, worin $R^1$, $R^2$, $R^3$ und $R^4$ gleich oder verschieden sein können und mindestens einen Methyl- oder mindestens einen Phenylrest darstellen und worin n = eine ganze Zahl zwischen 10 und 3000.

7. Katalysatoren für die Copolymerisation von Ethylen nach dem Gasphasenwirbelschichtverfahren hergestellt nach einem der Ansprüche 1 bis 6.

8. Verwendung der Copolymerisate, hergestellt mit einem Katalysator nach Anspruch 7, zur Herstellung von Folien mit geringen Blockeigenschaften.

**Claims**

1. A process for the preparation of a catalyst for the copolymerization of ethylene by the gas-phase fluidized-bed method using an active component consisting of a titanium-containing and magnesium-containing compound, a polysiloxane, a carrier comprising finely divided silica, an alkylaluminium compound and a Lewis base, wherein the titanium-containing and magnesium-containing active component, reacted with an alcohol as a complexing agent, is applied to the silica from homogeneous solution, in the presence of the polysiloxane, by evaporating the solvent, and the resulting homogeneous catalyst intermediate is then preactivated by treatment with the alkylaluminium compound and the Lewis base in an inert hydrocarbon solution, a titanium-containing compound of the formula $TiCl_3.nAlCl_3$, where n is from 0 to 0.5, being used as the active component consisting of a titanium-containing compound, a magnesium-containing compound of the formula $MgX_2$, where X is Cl, Br or iodine, being used as the active component consisting of a magnesium-containing compound, and an alcohol of the formula ROH, where R is an aliphatic $C_2$-to $C_{14}$-hydrocarbon radical, being used as the alcohol, and the aluminium compound dissolved in an inert hydrocarbon being of the formula $Al(R^1)(R^2)X$, where $R^1$ and $R^2$ are each a saturated $C_1$- to $C_{12}$-hydrocarbon radical or chlorine and X is chlorine, hydrogen or alkoxy.

2. A process as claimed in claim 1, wherein, during evaporation of the solvent under inert gas or under reduced pressure, up to 50 percent by volume of the solvent is removed at from 60 to 80 °C and the remainder is removed down to a final reduced pressure of 5 mbar at not more than 50 °C.

3. A process as claimed in claim 1, wherein the solvent is a saturated oxahydrocarbon.

4. A process as claimed in claim 1, wherein the carrier silica has a mean specific surface area of from 200 to 400 $m^2/g$, a mean particle diameter of from 5 to 200 µm and a mean specific pore volume of from

1.5 to 2.0 $cm^3/g$.

**5.** A process as claimed in claim 1, wherein the Lewis base is a silane derivative of the formula $R^1{}_mSi(OR^2)_{4-m}$, where m is from 0 to 4 and $R^1$ and $R^2$ are each a $C_1$-$C_{12}$-hydrocarbon radical, or a dimeric siloxane of the formula $(R^1)_3$-Si-O-Si$(R^2)_3$, where $R^1$ and $R^2$ are each $C_1$-$C_{12}$-alkyl.

**6.** A process as claimed in claim 1, wherein the polysiloxane is of the formula

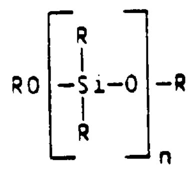

where $R^1$, $R^2$, $R^3$ and $R^4$ may be identical or different and are one or more methyl radicals or one or more phenyl radicals and n is an integer of from 10 to 3,000.

**7.** A catalyst for the copolymerization of ethylene by the gas-phase fluidized-bed method, prepared as claimed in any of claims 1 to 6.

**8.** Use of a copolymer, prepared using a catalyst as claimed in claim 7, for the production of films exhibiting little blocking.

## Revendications

**1.** Procédé de préparation d'un catalyseur pour la copolymérisation d'èthylène suivant le procédé en phase gazeuse en lit fluidisé, avec utilisation d'un composant actif a base d'un compose contenant du titane et du magnésium, d'un polysiloxane d'une matière de support comprenant du dioxyde de silicium finement divisé, d'un composé alkylaluminique et d'une base de Lewis, caractérisé en ce que le composant actif contenant du titane et du magnésium, mis en réaction avec un alcool en tant que complexant, est fixé à partir d'une solution homogene sur le dioxyde de silicium, en présence du polysiloxane, par évaporation du solvant, puis le précurseur de catalyseur homogène résultant est préactivé par traitement par le composé alkylaluminique et la base de Lewis en solution dans un hvdrocarbure inerte, en ce qu'on utilise, comme composant actif à base d'un compose contenant du titane, un composé du titane de formule générale $TiCl_3.nAlCl_3$ (dans laquelle n est mis pour un nombre dans la plage de 0 à 0,5), comme composant actif à base a'un composé contenant du magnésium, un composé du magnésium de formule genérale $MgX_2$ (dans laquelle X est mis pour Cl, Br ou I) et, comme alcool, des alcools de formule générale ROH (dans laquelle R est mis pour un reste hydrocarboné aliphatique en $C_2$-$C_{14}$) et en ce que le composé d'aluminium dissous dans un hydrocarbure inerte répond à la formule $Al(R^1)(R^2)X$, dans laquelle $R^1$ et $R^2$ sont mis chacun pour un reste hydrocarboné en $C_1$-$C_{12}$ saturé ou pour un atome de chlore et dans laquelle X est mis pour un atome de chlore, d'hydrogène ou pour un groupement alcoxy.

**2.** Procédé selon la revendication 1, caractérisé en ce que, lors de l'évaporation du solvant, jusqu'a 50% en volume du solvant sont éliminés sous atmosphère de gaz inerte ou sous pression réduite dans la gamme de température de 60 à 80 °C, et le reste est éliminé jusqu'à un vide final de 5 mbar à une température de 50 °C au maximum.

**3.** Procédé selon la revendication 1, caractérisé en ce que le solvant est un oxahydrocarbure saturé.

**4.** Procédé selon la revendication 1, caractérisé en ce que le dioxyde de silicium servant de matière de support présente une surface spécifique moyenne de 200 à 400 $m^2/g$, un diamètre moyen de grains de 5 à 200 µm et un volume spécifique moyen de pores de 1,5 à 2,0 $cm^3/g$.

**5.** Procédé selon la revendication 1, caractérisé en ce que la base de Lewis est un dérivé de silane de formule $R^1{}_mSi(OR^2)_{4-m}$, dans laquelle m est un nombre de 0 à 4 et $R^1$, $R^2$ sont des restes

hydrocarbonés en $C_1$ à $C_{12}$, ou un siloxane dimère de formule générale $(R^1)_3$-Si-O-Si$(R^2)_3$, dans laquelle $R^1$ et $R^2$ sont mis chacun pour un groupement alkyle en $C_1$ à $C_{12}$.

**6.** Procédé selon la revendication 1, caractérisé en ce que le polysiloxane répond à la formule générale

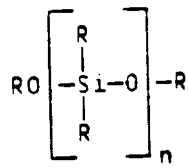

dans laquelle $R^1$, $R^2$, $R^3$ et $R^4$ peuvent être identiques ou différents et représentent au moins un reste méthyle ou au moins un reste phényle, et dans laquelle n est un nombre entier de 10 à 3000.

**7.** Catalyseurs pour la copolymerisation d'éthyléne suivant le procédé en phase gazeuse en lit fluidisé, préparés selon l'une quelconque des revendications 1 à 6.

**8.** Utilisation des copolymères, préparés avec un catalyseur selon la revendication 7, pour la fabrication de feuilles ayant de faibles caractéristiques d'adhérence de contact entre elles.